# EUROPÄISCHE PATENTSCHRIFT

(11) **EP 4 549 798 B1**
(45) Veröffentlichungstag und Bekanntmachung des Hinweises auf die Patenterteilung: **02.12.2026**
(21) Anmeldenummer: 24209924.0
(22) Anmeldetag: 30.10.2024
(51) Int. Cl.: F16L 55/165, F16L 55/179, F16L 55/48, F16L 55/26, F16L 101/10

(54) **VORRICHTUNG ZUM ANBRINGEN UND DETEKTIEREN EINER MARKIERUNG IN EINEM KANAL ODER ROHRSYSTEM**
APPARATUS FOR APPLYING AND DETECTING A MARKING IN A CHANNEL OR PIPE SYSTEM
DISPOSITIF POUR APPLIQUER ET DÉTECTER UN MARQUAGE DANS UN CONDUIT OU UN SYSTÈME DE TUYAUX

(30) Priorität: 03.11.2023 DE 102023130395
(43) Veröffentlichungstag der Anmeldung: 07.05.2025
(73) Patentinhaber: iPEK International GmbH, 87477 Sulzberg (DE)
(72) Erfinder: Schiebel, Christian, 87616 Marktoberdorf (DE); Endler, Hannes, 87616 Marktoberdorf (DE)
(74) Vertreter: 2s-ip Schramm Schneider Bertagnoll Patent- und Rechtsanwälte Part mbB

(56) Entgegenhaltungen:
- DE-A1- 102019 111 885
- US-A1- 2016 061 374

## Beschreibung

### Gebiet der Erfindung

Die Erfindung betrifft eine Vorrichtung zum Anbringen einer Markierung an einer bestimmten Stelle in einem Rohrleitungs- und oder Kanalsystem.

### Hintergrund der Erfindung

Bei der Sanierung von Kanälen, etwa Abwasserkanälen, ist es üblich, zunächst eine Inspektion des Kanals durchzuführen. Basierend auf den Ergebnissen der Inspektion wird anschließend eine Sanierung des Kanals vorgenommen. Beim Sanierungsvorgag wird die zu sanierende Stelle mit einer Längenmessung bestimmt. Beispielsweise wird eine Fräseinrichtung in dem Kanal bis an eine frei zu fräsende Stelle (z.B. im Bereich eines Seiteneinlaufes, der von einem Inliner verdeckt wird) in dem Kanal vorgefahren, wobei die Position der frei zu fräsenden Stelle als Abstand zum Kanalschacht angegeben werden kann (der Abstand kann in Rahmen einer Inspektion mit Hilfe einer Längenmessung ermittelt werden).

Die Längenmessung (sowohl während der Inspektion als auch während der Sanierung) ist allerdings aufwendig und kann fehlerbehaftet sein, was dazu führen kann, dass der Fräsvorgang nicht an der gewünschten Stelle durchgeführt wird.

Die relevante Stelle (z.B. der von einem Inliner verdeckte Seiteneinlauf) kann auch mittels aufwendiger hochsensibler Radartechnik ermittelt werden. Hierbei kann über das Auswerten der reflektierten Radarwellen ein Lufteinschluss hinter dem Inliner detektiert werden. An dieser Stelle kann dann der Inliner entfernt werden.

Der Einsatz von Radartechnik ist allerdings nicht immer zuverlässig, da damit auch Fehlstellen (Lunker zwischen Inliner und Kanalwandung) fälschlicherweise als Seiteneinläufe interpretiert werden können. Somit eignet sich diese Messmethode nicht, um eine automatisierte Fräsung durchführen zu können.

Aus der US 2016/0061374 A1 ist eine Vorrichtung bekannt, die einen Fahrwagen eines Kanalinspektions- und/oder Wartungssystems umfasst. An dem Fahrwagen ist ein Arm angeordnet, an dessen freien Ende eine Markierung aufgenommen ist. Mit dem Arm kann die aufgenommene Markierung an eine vorbestimmte Stelle in dem Kanal bewegt werden und dort angebracht werden.

Aus der DE 10 2019 111 885 A1 ist eine Vorrichtung zum Sanieren von Leitungen bekannt, insbesondere zum Freilegen einer Abzweigung in einem mit einem Auskleidungsschlauch sanierten Leitungssystem. Die Vorrichtung weist einen um drei Raumachsen beweglichen und drehbaren Roboterarm auf, an dessen freiem Ende ein Fräswerkzeug angeordnet ist. Die Vorrichtung weist ferner eine Abstandsmesseinrichtung auf, die zweigeteilt aufgebaut ist. Ein erstes Sender- und Empfängermodul ist an der Vorrichtung selbst angeordnet und ein zweites mit dem ersten Sender- und Empfängermodul interagierendes Sender- und Empfängermodul ist in dem Leitungssystem an einem Referenzpunkt angeordnet.

### Aufgabe der Erfindung

Aufgabe der vorliegenden Erfindung ist es daher, Lösungen bereit zu stellen, mit denen eine einfache und sichere Lokalisierung von vorbestimmten Stellen (z.B. eine frei zu fräsende Stelle) im Kanal ermöglicht wird, um damit wiederum eine korrekte Sanierung des Kanals zu gewährleisten.

### Erfindungsgemäße Lösung

Gelöst wird diese Aufgabe mit einer Vorrichtung nach dem unabhängigen Anspruch 1.

Eine vorteilhafte Ausgestaltung der Erfindung ist im abhängigen Anspruch 2 angegeben.

Bereit gestellt wird demnach eine Vorrichtung umfassend einen Fahrwagen eines Kanalinspektions- und/oder Wartungssystems, an dem ein Arm angeordnet ist, wobei
- an einem freien Ende des Arms Aufnahmemittel zur Aufnahme einer Markierung, insbesondere RFID-Transponder, vorgesehen sind,
- der Arm ausgestaltet ist, das Aufnahmemittel mit der davon aufgenommenen Markierung an eine vorbestimmte Stelle in einem Rohrleitungs- und oder Kanalsystem zu bewegen, und
- das Aufnahmemittel ausgestaltet ist, die Markierung an der vorbestimmten Stelle anzubringen,
wobei der Arm mit mehreren Freiheitsgraden relativ zum Fahrwagen bewegbar ist, und wobei an dem Fahrwagen ein Magazin zur Aufnahme einer Anzahl von Markierungen vorgesehen ist, wobei der Arm weiter ausgestaltet ist, das Aufnahmemittel zum Magazin zu bewegen und wobei das Aufnahmemittel weiter ausgestaltet ist, eine Markierung aus dem Magazin aufzunehmen.

An dem Fahrwagen und/oder an dem Arm und/oder an dem Aufnahmemittel kann eine RFID-Schreibeinrichtung angeordnet sein, die angepasst ist, vor, während oder nach dem Anbringen des RFID-Transponders diesen mit Daten zu beschreiben.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: ein Beispiel einer Vorrichtung (Fahrwagen) in einem Kanal, mit der eine Markierung im Kanal angebracht werden kann; und
- Fig. 2: ein Beispiel einer Vorrichtung (Fahrwagen) in einem Kanal, mit der eine Markierung im Kanal detektiert werden kann.

### Detaillierte Beschreibung der Erfindung

Die Erfindung ermöglicht es, vorbestimmte Stellen (z.B. eine frei zu fräsende Stelle oder einen Gegenstand im Kanal, etwa eine Muffe) im Kanal sicher und fehlerfrei zu lokalisieren.

Hierbei werden Markierungen, etwa RFID-Tags bzw. RFID-Transponder, an bestimmten Stellen im Kanal angebracht, beispielsweise während einer Kanalinspektion. Die Markierungen können automatisiert und fehlerfrei beispielsweise von einem Fräsroboter erkannt werden. Wird das zu sanierende Rohr mit einem Inliner überzogen, können damit die frei zu fräsenden Stellen einfach und vor allem fehlerfrei detektiert werden.

Die Platzierung der Markierung kann an der Stelle selbst oder einer dazu relativen Position erfolgen. Für die Platzierung der Markierung können Klebetechniken eingesetzt werden, die Markierung kann in die Rohrwandung in eine gebohrte/gefräste Stelle oder Aussparung eingebracht werden, oder die Markierung kann mit Trägerbauteilen im Seiteneinlauf verspannt werden. Während oder nach der Platzierung kann die Markierung bzw. der RFID-Transponder mit zusätzlichen Daten beschrieben werden, insbesondere wenn die Markierung relativ zu der eigentlichen Stelle platziert wird.

Ein Fahrwagen- oder Schiebesystem mit einer RFID-Leseeinrichtung kann die Position des RFID-Transponders relativ zur RFID-Leseeinrichtung mittels gemessener Werte wie z.B. RSSI (Received Signal Strength. Indicator) millimetergenau ermitteln. Zusätzliche im RFID-Transponder gespeicherte Daten können ausgelesen werden und zum Beispiel als Information für einen anschließenden Fräsvorgang verwendet werden.

Das Verfahren hat zudem den Vorteil, dass der RFID-Transponder auch dann detektiert werden kann, wenn dieser beispielsweise von einem Inliner überdeckt wird.

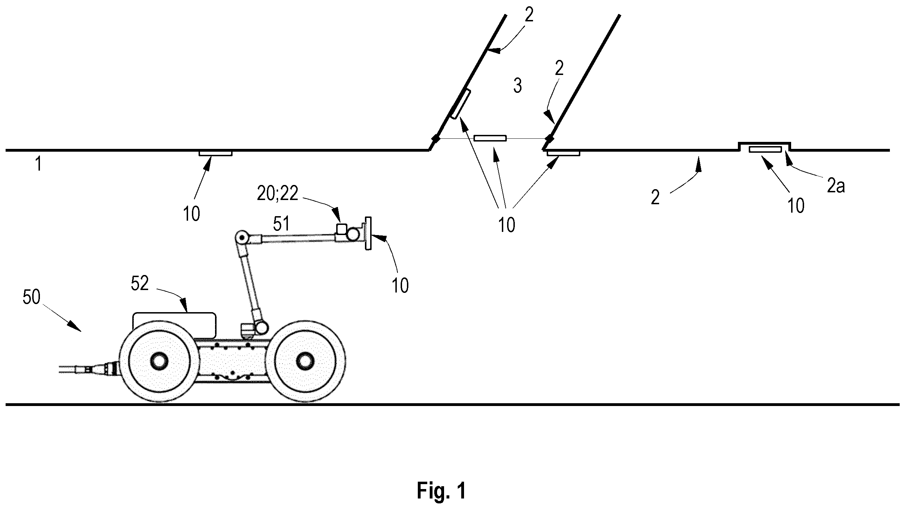

Fig. 1 zeigt einen Fahrwagen 50 in einem Kanal 1, mit dem Markierungen 10 im Kanal angebracht werden. In diesem Beispiel handelt es sich bei den Markierungen um RFID-Transponder.

Der Fahrwagen 50 weist einen Arm 51 auf, der hier mit mehreren Freiheitsgraden relativ zum Fahrwagen 50 bewegbar ist. An dem freien Ende des Arms 51 sind Aufnahmemittel zur Aufnahme eines RFID-Transponders 10 vorgesehen. Bei dem Aufnahmemittel kann es sich um eine Art Greifer handeln, mit dem der RFID-Transponder 10 gehalten werden kann.

An dem Fahrwagen ist hier ein Magazin 52 angeordnet, in dem eine Anzahl von RFID-Transpondern aufgenommen sind. Der Arm 51 ist vorzugweise so ausgestaltet, dass er das Aufnahmemittel zum Magazin bewegen kann, um mit dem Aufnahmemittel einen RFID-Transponder aus dem Magazin zu entnehmen. Das Magazin ist optional, sodass gemäß der Erfindung mit dem Fahrwagen auch nur ein einzelner RFID-Transponder in den Kanal verbracht und dort angebracht werden kann.

Der Arm 51 ist ferner ausgestaltet, das Aufnahmemittel mit dem davon aufgenommenen RFID-Transponder 10 an eine vorbestimmte Stelle im Kanal 1 zu bewegen und an der vorbestimmten Stelle im Kanal anzubringen.

In Fig. 1 sind mehrere bereits im Kanal angebrachte RFID-Transponder 10 gezeigt. Zwei RFID-Transponder 10 sind an der Kanalinnenwandung angebracht worden, beispielsweise mittels eines Klebers an der Kanalinnenwandung 2 befestigt. Ein weiterer RFID-Transponder 10 ist einer Aussparung 2a der Kanalinnenwandung 2 eingebracht worden - auch hierbei kann ein Kleber zum Befestigen des RFID-Transponders 10 in der Aussparung 2a verwendet werden. Ein weiterer RFID-Transponder 10 ist an der Wandung 2 eines Seiteneinlaufes 3 befestigt worden. Ein noch weiterer RFID-Transponder 10 ist in dem Seiteneinlauf 3 unter Verwendung von Spannmitteln befestigt worden. Zum Befestigen des RFID-Transponders 10 an einer vorbestimmten Stelle im Kanal können auch andere hierzu geeignete Systeme verwendet werden, z.B. magnetische Befestigung, Einpressen oder dergleichen.

Bei Kunststoffrohren bzw. einem Kanal aus Kunststoffrohren kann eine Transponderhalterung, an der der RFID-Transponder angeordnet ist, erhitzt werden und die erhitzte Transponderhalterung kann mit der Innenwandung des Rohres verschmolzen werden.

Andere geeignete Befestigungsarten sind ebenfalls möglich, solange die RFID-Transponder in Sinne der Erfindung derart an einer Innenwandung 2 des Rohrleitungs- und oder Kanalsystems angebracht werden, dass sie zumindest temporär dort verbleiben. "Temporär dort verbleiben" bedeutet hierbei, dass die RFID-Transponder zumindest so lange dort verbleiben, bis der Zweck der Markierung erfüllt ist (z.B. bis ein Kanalsanierungssystem den RFID-Transponder detektiert hat). Nach Erfüllung des Zweckes können die RFID-Transponder im Kanal verbleiben oder wieder entfernt werden.

Obwohl in Fig. 1 mehrere im Kanal angebrachte RFID-Transponder 10 gezeigt sind, ist in der Regel ein RFID-Transponder 10 ausreichend, um beispielsweise eine zu bearbeitende Stelle im Kanal zu markieren.

Mehrere RFID-Transponder 10 pro zu bearbeitender Stelle können aber die Genauigkeit erhöhen oder zu Redundanzzwecken vorteilhaft sein. Beispielsweise kann aus mehreren zueinander beabstandet platzierten RFID-Transpondern eine bestimmte Stelle im Kanal mittels einer Triangulation ermittelt werden.

Vor, während oder nach dem Anbringen eines RFID-Transponders 10 kann dieser mit Daten beschrieben werden, vorzugsweise mittels einer RFID-Schreibeinrichtung 22, die hier am vorderen Ende des Arms 51 angeordnet ist.

Folgende Daten bzw. Arten Daten haben sich hierbei als vorteilhaft herausgestellt, wobei die Erfindung nicht auf diese Daten bzw. Arten von Daten beschränkt ist:
- eine Kennung, insbesondere eindeutige Kennung,
- Position eines Seiteneinlaufes des Rohrleitungs- und oder Kanalsystems,
- Winkel eines Seiteneinlaufes des Rohrleitungs- und oder Kanalsystems,
- Durchmesser eines Seiteneinlaufes des Rohrleitungs- und oder Kanalsystems (1),
- Durchmesser des Rohrleitungs- und oder Kanalsystems,
- Position des RFID-Transponders relativ zum Mittelpunkt eines Seiteneinlaufes des Rohrleitungs- und oder Kanalsystems,
- Abstand zum Haltungsanfangspunkt,
- eine Kennung und/oder die Position der bestimmten Stelle (beispielsweise kann eine Kennung eines Gegenstandes (etwa einer Muffe) und eine Position des Gegenstandes im Kanal gespeichert werden),
- Geometrie des Seiteneinlaufes des Rohrleitungs- und oder Kanalsystems, und
- Kombinationen hiervon.

So kann beispielsweise ein RFID-Transponder 10 neben einem Seiteneinlauf 3 platziert werden. Werden in diesem RFID-Transponder die Position des RFID-Transponders relativ zum Mittelpunkt eines Seiteneinlaufes und der Durchmesser des Seiteneinlaufes als Daten gespeichert, kann beispielsweise ein Frässystem basierend auf diesen Daten einen Inliner exakt an dieser Stelle (Mittelpunkt) und in der korrekten Größe ausfräsen.

Möglich ist es beispielsweise auch, den RFID-Transponder 10 gegenüber der zu bearbeitenden Stelle bzw. des Seiteneinlaufes im Kanal zu platzieren. Anhand der im RFID-Transponder 10 gespeicherten Position eines Seiteneinlaufes kann die frei zu fräsende Stelle dennoch korrekt ermittelt werden.

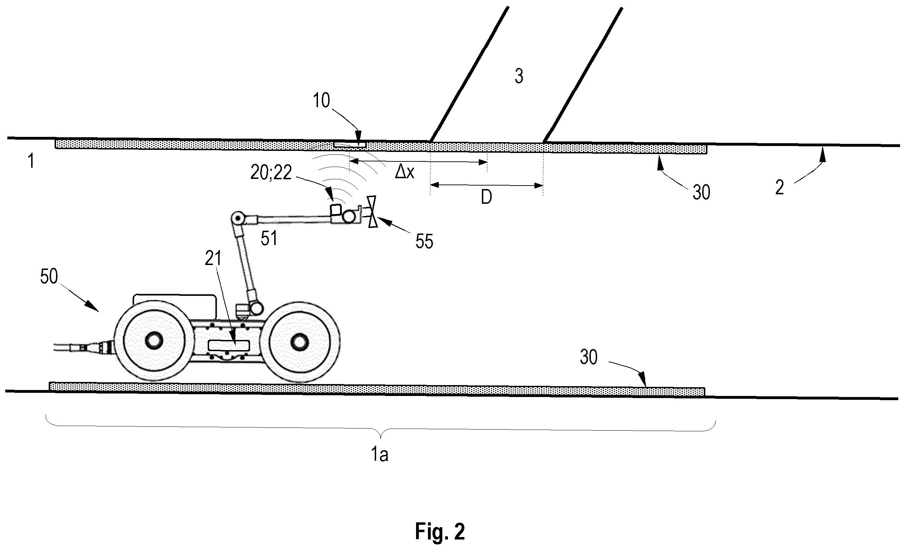

Fig. 2 zeigt einen Fahrwagen (ausgebildet als Fräsvorrichtung) in einem Kanal, mit der eine Markierung im Kanal detektiert werden kann.

Von dem Kanal zweigt ein Seiteinlauf 3 ab.

In einem vorangegangen Inspektionsvorgang wurde ein RFID-Transponder 10 an der Kanalinnenwandung 2 im Bereich nahe des Seiteinlaufes 3 angebracht (wie mit Bezug auf Fig. 1 beschrieben). Mit einer RFID-Schreibeinrichtung wurden in dem RFID-Transponder 10 die Position (als Abstand Δx) des RFID-Transponders relativ zum Mittelpunkt des Seiteneinlaufes 3 und der Durchmesser D des Seiteneinlaufes 3 als Daten gespeichert.

In einem nachfolgenden Sanierungsvorgang wurde ein Inliner 30 in den Bereich 1a des Kanals eingebracht, der den Seiteinlauf 3 abdeckt. Ferner verdeckt der Inliner hier auch den RFID-Transponder 10.

Mit dem in Fig. 2 gezeigten Fahrwagen 50, der als Fräsvorrichtung ausgestaltet ist, soll der Inliner im Bereich des Seiteinlaufes wieder entfernt werden, um die Funktion des Seiteneinlaufes wieder herzustellen.

Der Fahrwagen 50 weist einen Arm 51 auf, der hier mit mehreren Freiheitsgraden relativ zum Fahrwagen 50 bewegbar ist. An dem freien Ende des Arms 51 ist eine Fräseinrichtung 55 angeordnet, mit der der Seiteinlauf geöffnet werden soll bzw. der Inliner im Bereich des Seiteinlaufes entfernt werden soll.

An dem vorderen Ende des Arms 51 ist eine RFID-Leseeinrichtung 20 angeordnet. Mit der RFID-Leseeinrichtung wird einerseits der RFID-Transponder 10 detektiert (sobald sich dieser in Reichweite der RFID-Leseeinrichtung befindet). Andererseits werden die in dem RFID-Transponder gespeicherten Daten ausgelesen, in diesem Beispiel also die Position (als Abstand Δx) des RFID-Transponders 10 relativ zum Mittelpunkt des Seiteneinlaufes 3 und der Durchmesser D des Seiteneinlaufes 3.

Bei der Detektion des RFID-Transponders 10 wird die Position des RFID-Transponders 10 relativ zur RFID-Leseeinrichtung 20 mittels gemessener Werte wie z.B. RSSI (Received Signal Strength. Indicator) millimetergenau ermittelt.

Mit
- der Position des RFID-Transponders 10 relativ zur RFID-Leseeinrichtung 20,
- der Position (als Abstand Δx) des RFID-Transponders 10 relativ zum Mittelpunkt des Seiteneinlaufes 3 und
- dem Durchmesser D des Seiteneinlaufes 3
   sind die Lage des Seiteinlaufes relativ zum Fahrwagen 50 (bzw. relativ zur Fräseinrichtung 55) und der Durchmesser des Seiteneinlaufes bekannt, sodass ein präzises Öffnen des Seiteinlaufes gewährleistet werden.

Anhand dieser Informationen können der Arm 51 und die Fräseinrichtung 55 so gesteuert werden, dass die Fräseinrichtung 55 den Inliner exakt im Bereich des Seiteinlaufes 3 entfernt.

Die RFID-Leseeinrichtung 20 kann hierzu mit einer Datenverarbeitungseinrichtung 21 des Fahrwagens gekoppelt sein, die basierend auf diesen Informationen die Steuerung des Arms 51 und der Fräseinrichtung 55 übernimmt. Gegebenenfalls kann die Datenverarbeitungseinrichtung 21 auch die Steuerung des Fahrwagens 50 übernehmen, etwa wenn der Fahrwagen noch verfahren werden muss, damit die Fräseinrichtung 55 an die zu fräsende Stelle gelangen kann.

Dadurch wird nicht nur ein sicheres und exaktes Entfernen des Inliners im Bereich des Seiteinlaufes ermöglicht. Nach der Detektion des RFID-Transponders 10 und dem Auslesen der Daten aus dem RFID-Transponder kann der als Fräsvorrichtung ausgestaltete Fahrwagen 50 das Öffnen des Seiteinlaufes vollständig autonom, das heißt ohne menschliches Eingreifen durchführen.

Vorstehend wurde das Anbringen eines RFID-Transponders im Kanal und das Detektieren eines angebrachten RFID-Transponders zum Zweck einer Kanalsanierung mit einem Inliner, der partiell wieder entfernt werden muss, beschrieben.

RFID-Transponders können aber auch für andere Zwecke im Kanal angebracht und anschließen detektiert werden. Beispielsweise können während einer Kanalinspektion RFID-Transponder an vorbestimmten Stellen im Kanal angebracht werden, die zu einem späteren Zeitpunkt wieder aufgefunden werden müssen, etwa wenn Messungen mit unterschiedlichen Inspektionssystemen durchgeführt werden müssen und die Messungen einen gemeinsamen eindeutigen Bezugspunkt benötigen, an denen sich die unterschiedlichen Inspektionssysteme ausrichten können.

### Bezugszeichenliste

- 1: Rohrleitungs- und oder Kanalsystem
- 1a: Abschnitt des Rohrleitungs- und oder Kanalsystems
- 2: Innenwandung des Rohrleitungs- und oder Kanalsystems 1
- 2a: Aussparung an der Innenwandung 2
- 3: Seiteneinlauf
- 10: Markierung (z.B. RFID-Transponder)
- 20: RFID-Leseeinrichtung
- 21: Datenverarbeitungseinrichtung
- 22: RFID-Schreibeinrichtung
- 30: Inliner
- 50: Fahrwagen
- 51: Arm des Fahrwagen 50
- 52: Magazin
- 55: Fräseinrichtung
- Δx: Abstand
- D: Durchmesser des Seiteinlaufes

## Patentansprüche

1. Vorrichtung umfassend einen Fahrwagen (50) eines Kanalinspektions- und/oder Wartungssystems, an dem ein Arm (51) angeordnet ist, wobei
- an einem freien Ende des Arms Aufnahmemittel zur Aufnahme einer Markierung (10), insbesondere RFID-Transponder, vorgesehen sind,
- der Arm ausgestaltet ist, das Aufnahmemittel mit der davon aufgenommenen Markierung (10) an eine vorbestimmte Stelle in einem Rohrleitungs- und oder Kanalsystem zu bewegen, und
- das Aufnahmemittel ausgestaltet ist, die Markierung an der vorbestimmten Stelle anzubringen,
**dadurch gekennzeichnet, dass**
- der Arm (51) mit mehreren Freiheitsgraden relativ zum Fahrwagen bewegbar ist, und
- an dem Fahrwagen ein Magazin (52) zur Aufnahme einer Anzahl von Markierungen vorgesehen ist, wobei der Arm weiter ausgestaltet ist, das Aufnahmemittel zum Magazin zu bewegen und wobei das Aufnahmemittel weiter ausgestaltet ist, eine Markierung aus dem Magazin aufzunehmen.

2. Vorrichtung nach dem vorhergehenden Anspruch, wobei an dem Fahrwagen und/oder an dem Arm und/oder an dem Aufnahmemittel eine RFID-Schreibeinrichtung (22) angeordnet ist, die angepasst ist, vor, während oder nach dem Anbringen des RFID-Transponders diesen mit Daten zu beschreiben.

## Claims

1. A device comprising a carriage (50) of a sewer inspection and/or maintenance system, on which an arm (51) is mounted, wherein
- mounting means for receiving a marker (10), in particular an RFID transponder, are provided at a free end of the arm,
- the arm is designed to move the receiving means, together with the marker (10) held by it, to a predetermined location within a pipework and/or duct system, and
- the holding means is configured to attach the marker at the predetermined location,
**characterized in that**
- the arm (51) is movable with a plurality of degrees of freedom relative to the carriage, and
- a magazine (52) for holding a number of markers is provided on the carriage, wherein the arm is further configured to move the holding means towards the magazine, and wherein the holding means is further configured to pick up a marker from the magazine.

2. A device according to the preceding claim, wherein an RFID writing device (22) is arranged on the carriage and/or on the arm and/or on the receiving means, which is adapted to write data to the RFID transponder before, during or after its attachment.

## Revendications

1. Dispositif comprenant un chariot (50) d'un système d'inspection et/ou d'entretien de canalisations, sur lequel est disposé un bras (51), dans lequel
- des moyens de réception destinés à recevoir un marqueur (10), en particulier un transpondeur RFID, sont prévus à une extrémité libre du bras,
- le bras est conçu pour déplacer le moyen de réception, avec le marqueur (10) qu'il porte, vers un emplacement prédéterminé dans un système de canalisations et/ou de conduites, et
- le moyen de réception est conçu pour fixer le marqueur à l'emplacement prédéterminé,
**caractérisé en ce que**
- le bras (51) est mobile avec plusieurs degrés de liberté par rapport au chariot, et
- un magasin (52) destiné à recevoir un certain nombre de repères est prévu sur le chariot, le bras étant en outre conçu pour déplacer le moyen de préhension vers le magasin et le moyen de préhension étant en outre conçu pour prélever un repère dans le magasin.

2. Dispositif selon la revendication précédente, dans lequel un dispositif d'écriture RFID (22) est disposé sur le chariot et/ou sur le bras et/ou sur le moyen de préhension, lequel dispositif est adapté pour écrire des données sur le transpondeur RFID avant, pendant ou après la mise en place de celui-ci.
